# EUROPÄISCHE PATENTSCHRIFT

(11) **EP 1 982 085 B1**
(45) Veröffentlichungstag und Bekanntmachung des Hinweises auf die Patenterteilung: **06.01.2010**
(21) Anmeldenummer: 07725651.9
(22) Anmeldetag: 30.05.2007
(51) Int. Cl.: F16C 3/035, F16D 3/06, F16C 29/06

(54) **LÄNGENVARIABLE WELLE**
LENGTH-VARIABLE SHAFT
ARBRE DE LONGUEUR VARIABLE

(30) Priorität: 28.06.2006 DE 102006030105
(43) Veröffentlichungstag der Anmeldung: 22.10.2008
(73) Patentinhaber: Voith Turbo GmbH & Co. KG, 89522 Heidenheim (DE)
(72) Erfinder: GRAWENHOF, Peter, 89547 Dettingen (DE)
(74) Vertreter: Weitzel, Wolfgang
(86) Internationale Anmeldenummer: PCT/EP2007/004760
(87) Internationale Veröffentlichungsnummer: WO 2008/000330

(56) Entgegenhaltungen:
- EP-A- 1 148 258
- EP-A- 1 398 242
- DE-A1- 2 435 916
- US-A- 2 995 908
- US-A- 3 393 020

## Beschreibung

Die Erfindung betrifft eine längenvariable Welle, das heißt eine Welle, die durch Verschieben von zwei Axialteilen relativ zueinander einen Längenausgleich bewirken kann, wenn sich die beiden axialen Enden der Welle aufeinander zu oder voneinander weg bewegen. Insbesondere ist die Welle eine Gelenkwelle, beispielsweise eine Kreuzgelenkwelle.

Wellen, auch Gelenkwellen, mit Längenausgleich sind in verschiedenen Ausführungen bekannt. In der Praxis kommt am häufigsten eine Keilwellenverbindung mit einer längsverzahnten Welle und einer Nabe zum Einsatz. Bei dieser Lösung weist ein erster Axialteil (die längsverzahnte Welle) eine sich über einen bestimmten Längenabschnitt erstreckende Außenverzahnung in Umfangsrichtung auf, welche in eine entsprechende Innenverzahnung am zweiten Axialteil (der Nabe) eingreift. Nachteilig bei dieser Lösung ist, dass mit zunehmendem vom ersten Axialteil auf den zweiten Axialteil übertragenen Drehmoment auch die Kraft zunimmt, welche erforderlich ist, um eine axiale Längenänderung der Welle zu bewirken.

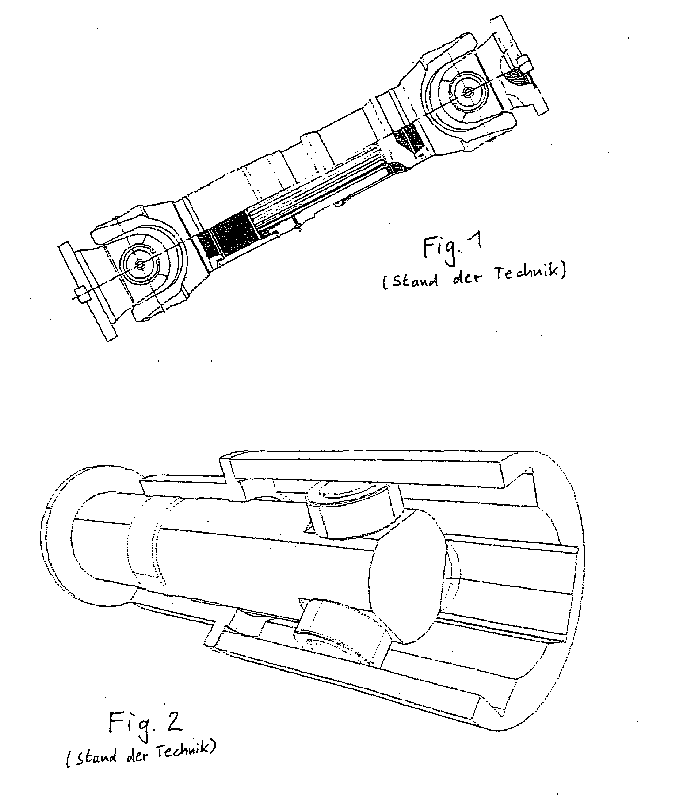

Die beschriebene Lösung gemäß dem Stand der Technik ist in der Figur 1 dargestellt.

Um den Nachteil der hohen erforderlichen Kraft für eine axiale Längenänderung bei zunehmendem Drehmoment, das auf die Welle übertragen wird, zu vermeiden, ist eine Welle mit einem wälzgelagerten Längenausgleich, auch als Tripode-Längenausgleich bezeichnet, vorgeschlagen worden. Eine Welle mit einem solchen Längenausgleich ist in der Figur 2 schematisch dargestellt. Bei dieser zweiten Ausführung wird das Drehmoment vom ersten Axialteil (auch als Welle bezeichnet) auf den zweiten Axialteil (auch als Nabe bezeichnet) über drei vorgesehene Kurvenrollen, welche in entsprechenden Führungsnuten wälzgelagert abrollen, übertragen. Aufgrund der vorgesehenen Wälzlagerung bleibt die Axialkraft, welche für eine Längenänderung, das heißt für eine relative Verschiebung zwischen den beiden Axialteilen, erforderlich ist, auch mit zunehmendem, vom ersten Axialteil auf den zweiten Axialteil oder vom zweiten Axialteil auf den ersten Axialteil übertragenen Drehmoment nahezu konstant.

Aufgrund des konstruktiven Aufbaus der Welle ist es jedoch erforderlich, die Nuten, in welchen die Kurvenrollen laufen, in Umfangsrichtung breiter als den äußeren Durchmesser der Kurvenrollen auszuführen. Hierdurch ergibt sich ein Spiel in Umfangsrichtung zwischen dem ersten Axialteil und dem zweiten Axialteil.

Die dargestellte Lösung ist besonders dann störanfällig, wenn im Betrieb geringe Längenänderungen bei gleichzeitig hohen Leerlaufanteilen, welche durch ein geringes Drehmoment gekennzeichnet sind, auftreten. Die dann häufig auftretenden Gleitbewegungen begünstigen den sogenannten Passungsrost und führen zu einem mechanischen Einarbeiten der Kurvenrolle in die Führungsnut, so dass die vorgesehenen Führungsflächen-unerwünscht uneben werden können.

Weitere Lager für teleskopierbare Wellen sind in den Druckschriften US 2 995 908 A, US 3 318 109 A, GB 872 549 A und FR 55 557 E dargestellt. Auch bei diesen Lagern ist zwingend ein Spiel in Umfangsrichtung zwischen den beiden in Längsrichtung verschiebbaren Teilen erforderlich.

Die Offenlegungsschrift DE 102 50 663 A1 beschreibt ein Lager einer teleskopischen Verbindung, mit welchem Drehmomente zwischen einem Innenprofil und einem Außenprofil übertragen werden können und ein quer zur Längsachse gerichtetes Lagerspiel elastisch dadurch ausgeglichen ist, dass stets eine elastische Abstützung in radialer Richtung nach außen auf zwei entgegengesetzt zueinander angeordneten Durchmesserpunkten vorgesehen ist.

Ein weiterer Nachteil der in den zuvor genannten Druckschriften dargestellten Lager ist das aufgrund der gewählten Bauform begrenzte maximale Drehmoment, das zwischen den beiden telekopierbaren Teilen übertragbar ist. Insbesondere die punktförmigen Kontaktstellen zwischen den beiden teleskopierbaren Teilen und die Verspannung in Radialrichtung nach außen schränken das maximale Übertragungsvermögen ein. Schließlich bedingt die Lagerform in Axialrichtung sehr lange Lineareinheiten, für welche ein entsprechender Abwälzbereich in Axialrichtung der Bauteile zur Verfügung gestellt werden muss, was wiederum das Telskopiervermögen, das heißt die Differenz zwischen der maximal eingefahrenen Stellung der maximal ausgefahrenen Stellung verringert.

Der Erfindung liegt die Aufgabe zugrunde, eine Welle mit Längenausgleich, insbesondere Gelenkwelle, darzustellen, welche einerseits unabhängig vom mittels der Welle übertragenen Drehmoment mit einer vergleichsweise geringen Zug- oder Druckkraft zusammen- oder auseinanderfahrbar ist, und welche zugleich die genannten Nachteile vermeidet. Insbesondere soll der Längenausgleich in Axialrichtung möglichst kurz ausgeführt sein, um den teleskopierbaren Weg zu maximieren.

Die erfindungsgemäße Aufgabe wird durch eine Welle mit den Merkmalen von Anspruch 1 gelöst. Die abhängigen Ansprüche beschreiben vorteilhafte und besonders zweckmäßige Ausgestaltungen der Erfindung.

Die erfindungsgemäße Welle, welche der Übertragung eines Drehmomentes von einem ersten axialen Wellenende zu einem zweiten, dem ersten axialen Wellenende entgegengesetzten axialen Wellenende dient, weist einen Längenausgleich auf, das heißt sie umfasst mindestens zwei in Axialrichtung der Welle relativ zueinander verschiebbare Axialteile. Die beiden Axialteile sind gegeneinander wälzgelagert, das heißt es ist eine Wälzlagerung zwischen dem ersten und dem zweiten Axialteil vorgesehen, die eine Vielzahl von Wälzkörpern aufweiset, die zum Beispiel tonnenförmig, kegelförmig, nadelförmig oder anders gestaltet sein können, solange sie eine punktförmige Abstützung zwischen den beiden Axialteilen vermeiden und stattdessen eine lineare Abwälzfläche zwischen den beiden Axialteilen vorsehen.

Die Wälzlagerung dient nicht nur der relativen Verschiebung zwischen dem ersten Axialteil und dem zweiten Axialteil mit einer vergleichsweise geringen Schub- oder Druckkraft, wobei die Wälzkörper der Wälzlagerung eine Abrollbewegung ausführen, sondern sie überträgt ferner Drehmoment vom ersten Axialteil auf den zweiten Axialteil, wenn der erste Axialteil das Antriebsende und der zweite Axialteil das Abtriebsende der Welle bildet, beziehungsweise vom zweiten Axialteil auf den ersten Axialteil, wenn der zweite Axialteil das Antriebsende und der erste Axialteil das Abtriebsende der Welle bildet. Wenn kein weiteres drehmomentaufnehmendes Bauteil vorgesehen ist, wird dabei das gesamte Drehmoment, welches auf das Antriebsende aufgebracht wird, auf das Abtriebsende übertragen, vorzugsweise ausschließlich über die Wälzlagerung zwischen dem ersten und dem zweiten Axialteil.

Erfindungsgemäß weist die Wälziagerung wenigstens ein Paar von Lagereinheiten mit jeweils einer Vielzahl von Wälzkörpern auf. Das Paar umfasst dabei wenigstens oder genau zwei Lagereinheiten. Die erste Lagereinheit stützt den ersten Axialteil spielfrei oder sogar mit einer Vorspannung in eine erste Umfangsrichtung der Welle gegen den zweiten Axialteil ab. Die zweite Lagereinheit stützt den ersten Axialteil ebenfalls spielfrei oder mit Vorspannung in eine zweite, entgegengesetzt zu der ersten Umfangsrichtung gerichtete Umfangsrichtung der Welle gegen den zweiten Axialteil ab.

Wenn die beiden Lagereinheiten in demselben Axialteil angeordnet sind, dem ersten oder dem zweiten Axialteil, können sie sich jeweils unmittelbar am anderen Axialteil abstützen, und zwar in entgegengesetzten Umfangsrichtungen der Welle. Die Lagereinheiten sind in der Regel in Umfangsrichtung der Welle drehstarr und steif oder auch elastisch am oder im entsprechenden Axialteil angeschlossen. Somit wird eine wälzgelagerte, spielfreie, drehmomentübertragende Verbindung zwischen den beiden Axialteilen erreicht.

Der erste Axialteil wird vorteilhaft in Axialrichtung wenigstens teilweise und in Umfangsrichtung insbesondere vollständig vom zweiten Axialteil umschlossen. Die Lagereinheiten sind bei dieser Ausführung insbesondere radial zwischen dem ersten Axialteil und dem zweiten Axialteil positioniert.

Beispielsweise weist der erste Axialteil wenigstens einen Vorsprung auf, an welchem jeweils eine Lagereinheit angeschlossen ist oder mehrere Lagereinheiten angeschlossen sind. Vorteilhaft sind mehrere Vorsprünge vorgesehen, von denen jeder eine oder mehrere Lagereinheiten aufnimmt.

Der zweite Axialteil weist vorteilhaft wenigstens eine Nut oder eine Vielzahl von Nuten auf, insbesondere in der Anzahl entsprechend der Zahl der Vorsprünge oder der Zahl der Lagereinheiten, in welche Nuten die eine Lagereinheit eingreift beziehungsweise die mehreren Lagereinheiten eingreifen. In eine Nut kann dabei jeweils eine Lagereinheit eingreifen. Alternativ ist es auch möglich, dass mehrere Lagereinheiten in ein- und dieselbe Nut eingreifen. Beispielsweise greifen jeweils zwei Lagereinheiten in eine Nut ein.

Jede Nut kann eine oder mehrere, insbesondere zwei in Axialrichtung der Welle verlaufende Laufflächen aufweisen. Die beiden Laufflächen einer Nut stehen sich beispielsweise gegenüber. Vorteilhaft verlaufen die Laufflächen in einer achsparallelen Axialschnittebene, die insbesondere mit Abstand zu der Mittelachse angeordnet ist.

Auf den genannten Laufflächen können entweder die Wälzkörper oder eine sich auf den Wälzkörpern drehende Lagerschale von einem oder mehreren Lagereinheiten abrollen.

Die Lagerschale kann beispielsweise durch eine Kurvenrolle, wie sie mit Bezug auf den Stand der Technik in der Beschreibungseinleitung dargestellt worden ist, gebildet werden, das heißt eine Ringform aufweisen, die sich über die Wälzkörper auf einem Zapfen oder dergleichen dreht.

Die Lagereinheiten sind an dem zum zweiten Axialteil gerichteten axialen Ende des ersten Axialteils angeordnet. Am axialen Ende angeordnet bedeutet dabei, dass die Lagereinheiten entweder unmittelbar mit diesem axialen Ende abschließen oder im Bereich dieses axialen Endes angeordnet sind, das heißt entweder steht das axiale Ende des Axialteils über die Lagereinheiten in der Axialrichtung über, oder auch die Lagereinheiten können über das axiale Ende des Axialteils überstehen. Um die Lagereinheiten in Axialrichtung besonders kurz ausführen zu können, ist im Bereich des dem ersten Axialteil zugewandten axialen Endes des zweiten Axialteils eine Stützbuchse angeordnet, die mit den Lagereinheiten zusammenarbeitet. Diese Stützbuchse ist ein an der Berührungsfläche zu dem ersten Axialteil und dem zweiten Axialteil angeordnetes Gleitelement, über welches die beiden Axialteile in Radialrichtung gegeneinander abgestützt sind und welches zugleich ein leichtes Gleiten in Axialrichtung ermöglicht. Dieses Gleitelement kann beispielsweise eine geschlossene Ringform aufweisen oder es können eine Vielzahl von über dem Umfang verteilten einzelnen Gleitelementen vorgesehen sein. Vorteilhaft ist, dass wenigstens ein Gleitelement an der radial innenliegenden Fläche des zweiten Axialteils, welche die äußere Umfangsfläche des ersten Axialteils umschließt, angeordnet beziehungsweise dort in den zweiten Axialteil eingesetzt. Somit gleitet der erste Axialteil mit seiner Umfangsfläche entlang des Gleitelements. Selbstverständlich ist es alternativ oder zusätzlich auch möglich, das oder wenigstens ein Gleitelement auf der äußeren Umfangsfläche des ersten Axialteils anzuordnen. Das oder die Gleitelemente können auch einstückig mit dem jeweiligen Axialteil ausgebildet sein, beispielsweise in Form einer Beschichtung. Sie zeichnen sich jeweils dadurch aus, dass sie eine in Radialrichtung im wesentlichen starre Abstützung zwischen den beiden Axialteilen ermöglichen und zugleich das Ineinandergleiten der beiden Axialteile erleichtern.

Die Erfindung soll nachfolgend anhand von Ausführungsbeispielen und den Figuren exemplarisch beschrieben werden.

Es zeigen:
- Figur 1: eine Kreuzgelenkwelle gemäß dem Stand der Technik;
- Figur 2: eine weitere Ausführungsform einer Kreuzgelenkwelle gemäß dem Stand der Technik;
- Figur 3: eine erste Ausführungsform einer erfindungsgemäßen Welle mit zwei Paaren von Lineareinheiten und einer stirnseitigen Zentrierscheibe;
- Figur 4: eine zweite Ausführungsform einer erfindungsgemäßen Welle mit zwei Paaren von Lineareinheiten und zwei zusätzlich vorgesehenen Gleitlagern;
- Figur 5: eine dritte Ausführungsform der erfindungsgemäßen Welle ähnlich zu jener der Figur 4, aber mit formschlüssig an dem ersten Axialteil angeschlossenen Vorsprüngen;
- Figur 6: eine vierte Ausführungsform der erfindungsgemäßen Welle mit zwei, von jeweils einem Paar von Lagereinheiten eingeschlossenen Führungsschienen;
- Figur 7: eine fünfte Ausführungsform der erfindungsgemäßen Welle mit vier mit einem Abstand von 90° zueinander angeordneten Kurvenrollen als Lagereinheiten;
- Figur 8: eine sechste Ausführungsform der Erfindung entsprechend der Figur 7, bei welcher jedoch die Kurvenrollen auf in dem zweiten Axialteil eingesetzten Führungsschienen abrollen;
- Figur 9: eine weitere Ausführungsform der erfindungsgemäßen Welle mit zwei Paaren mit jeweils zwei Lineareinheiten als Lagereinheiten, die rechtwinklig beziehungsweise mit einem Abstand von 90° zueinander angeordnet sind.

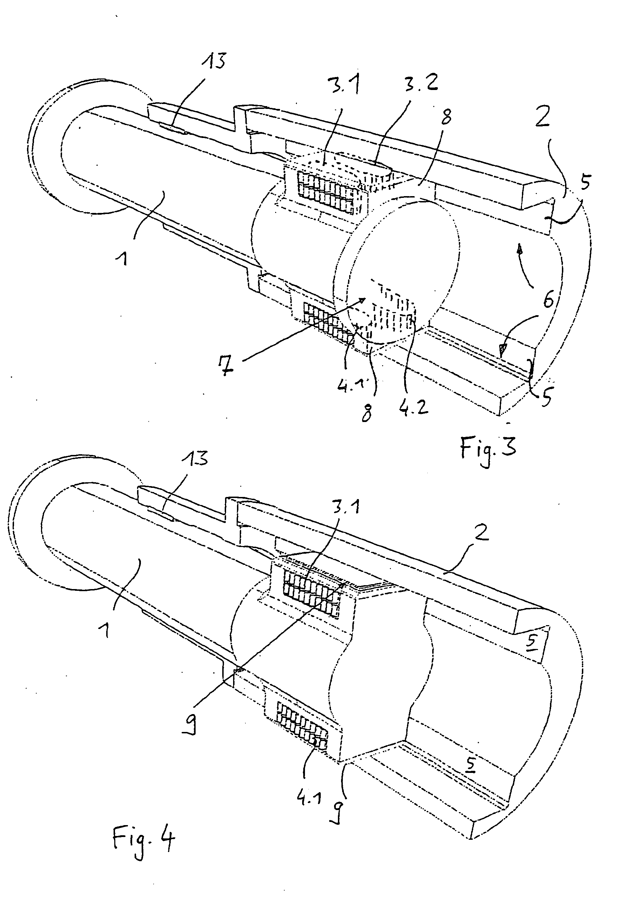

In der Figur 3 erkennt man eine Welle mit Längenausgleich, die aus dem ersten Axialteil 1 und dem zweiten Axialteil 2 besteht beziehungsweise diese beiden Axialteile 1, 2 umfasst. Der erste Axialteil 1 weist vier Lagereinheiten auf, von denen jeweils zwei zu einem Paar zusammengefasst sind. Auf einer ersten radialen Seite, hier der Oberseite, ist das erste Paar von Lagereinheiten 3.1 und 3.2 angeordnet, und auf der diametral entgegengesetzten Seite, hier der Unterseite des ersten Axialteils 1, ist das zweite Paar mit den Lagereinheiten 4.1 und 4.2 angeordnet. Alle Lagereinheiten 3.1, 3.2, 4.1, 4.2 sind als sogenannte Lineareinheiten, auch als Linearlager beziehungsweise Linearwälzlager bezeichnet, ausgeführt. Solche Lineareinheiten sind Lager mit einer Wätzkörperrückführung, die Linearbewegungen mit geringer,Reibung und die Möglichkeit eines unbegrenzten Hubes ermöglichen. Wie man in der Figur 3 erkennen kann, weist vorliegend jede Lineareinheit eine kettenbandförmige Anordnung von Wälzkörpern, hier zylindrischen Wälzkörpern, auf, welche entlang einer im wesentlichen elliptischen Bahn mit abgeflachten Längsseiten umlaufen.

Wenn der erste Axialteil 1 in den oder aus dem zweiten Axialteil 2 in Axialrichtung ein- oder ausgefahren wird, so rollt beziehungsweise wälzt jede Lagereinheit 3.1, 3.2, 4.1, 4.2 auf ihrer jeweiligen Außenseite entlang einer Lauffläche 5 im zweiten Axialteil 2 ab. Bei der gezeigten Ausführungsform rollen die Wälzkörper unmittelbar auf den Laufflächen 5 ab.

Die sich abwälzenden Außenseiten der beiden Lagereinheiten 3.1, 3.2 und 4.1, 4.2 eines Paares von Lagereinheiten sind in Umfangsrichtung der Welle entgegengesetzt zueinander angeordnet, so dass die beiden Lagereinheiten eines Paares von Lagereinheiten entsprechend in einer gemeinsamen Nut 6 des zweiten Axialteils 2 positioniert sind beziehungsweise in diese Nut 6 eingreifen.

Neben den zwei Nuten 6 weist der zweite Axialteil 2 auf seiner Innenseite einen im Querschnitt kreisförmigen Umfangsbereich auf, wobei dieser kreisförmige Umfangsbereich durch die beiden Nuten 6 unterbrochen wird. Der kreisförmige Umfangsbereich dient einerseits der Aufnahme des zylinderförmigen Abschnitts des ersten Axialteils 1 und andererseits der gleitenden Aufnahme einer am ersten Axialteil angeschlossenen kreisscheibenförmigen Zentrierscheibe 7, die vorzugsweise aus einem Gleitlagermaterial besteht. Die Zentrierscheibe 7 bildet somit zusätzlich zu der Wälzlagerung mit den genannten vier Lagereinheiten 3.1, 3.2, 4.1, 4.2 des ersten Axialteils 1 eine Gleitlagerung aus, mittels welcher der erste Axialteil 1 im zweiten Axialteil 2 gelagert ist.

Aufgrund ihrer kreisförmigen Ausgestaltung ist die Gleitlagerung nicht in der Lage, Drehmoment von dem ersten Axialteil auf den zweiten Axialteil zu übertragen. Somit hat die Höhe des, Drehmoments keinerlei Einfluss auf die Verschiebekraft, welche erforderlich ist, um die Zentrierscheibe 7 im zweiten Axialteil 2 zu verschieben.

Die Lagereinheiten 3.1, 3.2, 4.1, 4.2 sind an jenem axialen Ende des ersten Axialteils 1 angeordnet, welches dem zweiten Axialteil 2 zugewandt ist. Mit Abstand in Axialrichtung zu den Lagereinheiten 3.1, 3.2, 4.1, 4.2 ist an jenem axialen Ende des zweiten Axialteils 2, das dem ersten Axialteil 1 zugewandt ist, ein Gleitelement 13 angeordnet, um den ersten Axialteil 1 in Radialrichtung desselben gegen den zweiten Axialteil 2 abzustützen, ohne dabei Drehmoment zu übertragen. Vorliegend ist das Gleitelement 13 als Gleiterring ausgeführt, der im zweiten Axialteil 2 an dessen innerer Umfangsfläche eingesetzt ist und den ersten Axialteil 1 in Umfangsrichtung vollständig umschließt. Der Gleitring kann dabei eine konstante Dicke oder eine über dem Umfang variierende Dicke aufweisen. Alternativ ist es auch möglich, statt eines einzigen geschlossenen Gleitrings nur ein einziges, nur über einen Teil des Umfangs reichendes Gleitelement 13 oder eine Vielzahl von Gleitelementen 13, die über dem Umfang der beiden Axialteile 1, 2 verteilt angeordnet sind, vorzusehen.

Das Vorsehen eines Gleitelementes 13 beziehungsweise einer Vielzahl von Gleitelementen 13 am axialen Ende des zweiten Axialteils 2 ermöglicht, die Lagereinheiten 3.1, 3.2, 4.1, 4.2 in Axialrichtung gesehen besonders kurz auszuführen. Insbesondere arbeitet das Gleitelement 13 mit einer weiteren Gleitlagerung, beispielsweise der Zentrierscheibe 7 in der Figur 3, am axial äußeren Ende des ersten Axialteils 1 zusammen, um den ersten Axialteil 1 an zwei voneinander in Axialrichtung entfernt angeordneten Positionen gegenüber dem zweiten Axialteil 2 in Radialrichtung abzustützen. Wie man in der Figur 4 erkennen kann, kann die Gleitlagerung am axialen Ende des ersten Axialteils 1 auch radial außerhalb beziehungsweise im axialen Bereich der Lagereinheiten 3.1, 3.2, 4.1, 4.2 angeordnet sein, um die doppelte radiale Abstützung des ersten Axialteils 1 gegen den zweiten Axialteil 2 durch eine Gleitlagerung zu erreichen.

Jeweils ein Paar von Lagereinheiten 3.1, 3.2 und 4.1, 4:2 ist in einem gemeinsamen Vorsprung 8 auf dem ersten Axialteil 1 angeordnet. Der Vorsprung 8 kann dabei integral mit dem ersten Axialteil 1 ausgebildet sein oder vorteilhaft kraft- und/oder formschlüssig am ersten Axialteil 1 angeschlossen sein. Bei dem in der Figur 3 gezeigten Ausführungsbeispiel können die Vorsprünge 8 beispielsweise durch eine stirnseitige formschlüssige Verbindung, wie zum Beispiel eine Stirnverzahnung, an dem zylinderförmigen Abschnitt des ersten Axialteils 1 angeschlossen sein.

Selbstverständlich ist es auch möglich, den in der Figur 3 gezeigten zylinderförmigen Abschnitt (der linke Teil des ersten Axialteils 1) in einer anderen Querschnittsform auszubilden, beispielsweise in der Form eines Vielecks, wie zum Beispiel eines Quadrats oder Rechtecks.

Die erste Lagereinheit 3.1, 4.1 von jedem Paar von Lagereinheiten arbeitet mit der zweiten Lagereinheit 3.2, 4.2 des entsprechenden Paares von Lagereinheiten derart zusammen, dass zwischen dem ersten Axialteil 1 und dem zweiten Axialteil 2 in Umfangsrichtung eine spielfreie und/oder vorgespannte Verbindung entsteht. Unter Umfangsrichtung im Sinne der vorliegenden Erfindung ist dabei nicht nur ein kreisförmiger Umfang zu verstehen, sondern auch geschlossene Umfänge, die von der Kreisform abweichen, sollen mit erfasst werden. Bei der in der Figur 3 dargestellten Ausführungsform sind zum Beispiel die beiden Lagereinheiten 3.1, 3.2 und 4.1, 4.2 eines jeden Paares von Lagereinheiten in jeweils derselben Ebene, hier Horizontalebene, angeordnet. Selbstverständlich wäre es auch möglich, die entsprechenden Lagereinheiten eines Paares winklig zueinander anzuordnen, beispielsweise auf eine gemeinsame bogenförmigen oder kreisförmige Umfangslinie. Im ersten Fall sind die Laufflächen 5 einer gemeinsamen Nut 6 koplanar und im zweiten Fall winklig zueinander angeordnet.

Bei der Ausführung gemäß der Figur 3 kann somit durch das Vorsehen von jeweils zwei Lineareinheiten auf zwei diametral entgegengesetzt zueinander angeordneten Seiten des ersten Axialteils 1 eine leichte Verspannung beziehungsweise Spielfreiheit in Umfangsrichtung zwischen dem ersten Axialteil 1 und dem zweiten Axialteil 2 erreicht werden. Um einen ausgezeichneten Rundlauf zu gewährleisten, ist zusätzlich die Zentrierscheibe 7 vorgesehen. Es ist jedoch auch möglich, diese Zentrierscheibe 7 einzusparen, wenn die Anforderungen an den Rundlauf weniger groß sind, oder zusätzlich oder alternativ andere Zentriermaßnahmen vorzusehen.

Die Ausführung gemäß Figur 4 entspricht weitgehend jener der Figur 3. Allerdings wird hier eine Zentrierung durch jeweils ein auf den Lagereinheiten 3.1, 3.2 und 4.1, 4.2 aufgebrachtes Gleitlager 9 erreicht. Dieses Gleitlager 9 stützt sich am Nutgrund der Nut 6 ab. Vorliegend ist pro Paar von Lagereinheiten 3.1, 3.2 und 4.1, 4.2 jeweils ein Gleitlager 9, das sich am entsprechenden Nutgrund von jeweils einer der beiden Nuten 6 abstützt, vorgesehen.

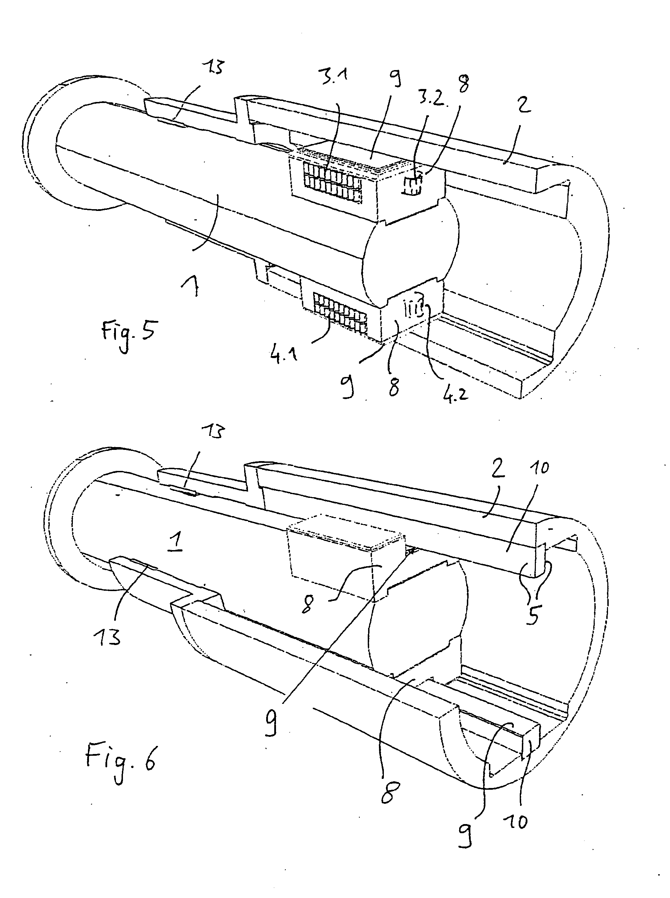

Die Ausführung gemäß der Figur 5 entspricht wiederum weitgehend jener der Figur 4. Abweichend zu der Ausführung gemäß der Figur 4 sind bei der Ausführung gemäß der Figur 5 jedoch die Vorsprünge 8, welche jeweils zwei Lagereinheiten 3.1, 3.2 und 4.1, 4.2 aufnehmen, nicht integral mit dem Rumpf des ersten Axialteils 1 ausgebildet, sondern formschlüssig an diesem angeschlossen. Vorliegend sind die Vorsprünge 8 in Nuten, die in Längsrichtung des ersten Axialteils 1 verlaufen, eingesetzt.

Die Ausführung der Figur 6 entspricht wiederum weitgehend jener der Figur 5. Abweichend schließen die Lineareinheiten eines Paares von Lineareinheiten jedoch eine Führungsschiene 10 zwischen sich ein. Die beiden Lineareinheiten sind spielfrei beziehungsweise mit Vorspannung gegen die Laufflächen 5, die jetzt beidseitig der Führungsschiene 10 ausgebildet sind, abgestützt. Die Führungsschiene 10 ist in den zweiten Axialteil 2 eingesetzt, beispielsweise, wie dargestellt, formschlüssig in einer Axialnut.

Die Führungsschiene 10 ist beispielsweise aus einem gehärteten Metall hergestellt, um sie besonders abriebfest auszuführen, und um die Reibung zwischen den Lagereinheiten und den Laufflächen zu minimieren

Bei dem in der Figur 6 gezeigten Ausführungsbeispiel sind die Vorsprünge 8 wiederum formschlüssig, jedoch diesmal auf einem Vorsprung des Rumpfes des ersten Wellenteils 1 aufgesetzt.

Bei der in der Figur 6 dargestellten Ausführungsform mit Führungsschienen 10 stützt sich auch das Gleitlager 9 auf den Lagereinheiten beziehungsweise den Vorsprüngen 8 gegen die Führungsschienen 10, und zwar hier deren radial innenliegenden Stirnseiten, ab. Hierdurch können die Gleiteigenschaften verbessert werden.

Grundsätzlich kann durch die mehrteilige Ausführung des zweiten Axialteils 2 mit Führungsschienen 10 und Grundkörper eine Materialtrennung beispielsweise von gehärteter Führungsschiene und vergütetem Grundkörper vorgesehen werden.

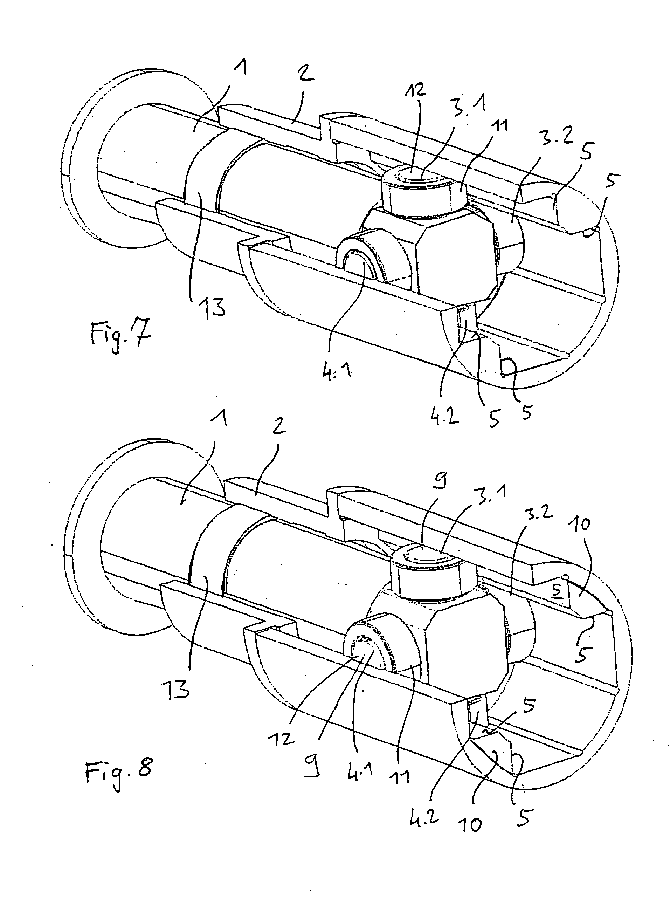

Bei den in den Figuren 7 bis 9 dargestellten Ausführungsformen einer erfindungsgemäßen Welle sind die beiden Lagereinheiten 3.1, 3.2, und 4.1, 4.2 von jedem der beiden Paare von Lagereinheiten winklig zueinander angeordnet. Der Winkel zwischen den beiden Lagereinheiten eines Paares ist vorzugsweise ein rechter.

Durch diese winklige Anordnung kann auf eine zusätzliche Zentrierung verzichtet werden, wodurch die axiale Verschiebbarkeit noch weniger kraftaufwendig ist.

Bei der Ausführung gemäß den Figuren 7 und 8 umfasst jede Lagereinheit 3.1, 3.2, 4.1, 4.2 eine Kurvenrolle 11. Jede Kurvenrolle 11 ist mittels einer Wälzlagerung, beispielsweise einem Kugellager, einem Ladelager oder einem Tonnenlager auf einem Lagerzapfen 12, der integral mit dem ersten Axialteil 1 ausgebildet ist oder formschlüssig und/oder kraftschlüssig an diesem angeschlossen ist, gelagert.

Jede Kurvenrolle 11 stützt sich spielfrei oder unter Vorspannung gegen eine ihr zugeordnete Lauffläche 5 im zweiten Axialteil 2 ab. Dadurch, dass sich zwei Kurvenrollen 11 der beiden Lagereinheiten 3.1, 3.2 und 4.1, 4.2 von jeweils einem Paar von Lagereinheiten in entgegengesetzte Richtungen (in Umfangsrichtung der Welle gesehen) gegen ihre jeweilige Lauffläche 5 abstützen, kann eine spielfreie beziehungsweise unter Vorspannung stehende Verbindung in Umfangsrichtung zwischen dem ersten Axialteil 1 und dem zweiten Axialteil 2 erreicht werden.

Wie dargestellt, können die Kurvenrollen beispielsweise auf einem kreuzähnlichen Träger montiert sein, der an den axial angrenzenden Rumpf des ersten Axialteils angeflanscht ist.

Um im axialen Bereich der Lagereinheiten 3.1, 3.2, 4.1, 4.2 beziehungsweise an jenem axialen Ende des ersten Axialteils 1, das dem zweiten Axialteil 2 zugewandt ist, wiederum eine gleitende Abstützung gegen den zweiten Axialteil 2 zu erreichen, können die Lagerzapfen 12 der Kurvenrollen 11 an ihrem äußeren Ende, welches im wesentlichen mit seiner Abschlussfläche in Umfangsrichtung beziehungsweise in Tangentialrichtung des ersten Axialteils 1 verläuft, Gleitlager 9 angeschlossen oder ausgebildet sein. Diese Gleitlager 9 können wiederum, wie zuvor dargestellt, mit dem wenigstens einen Gleitelement 13 im Bereich des axialen Endes des zweiten Axialteils 2 zusammenarbeiten, um die beiden Axialteile 1, 2 in Radialrichtung an zwei axialen Stellen, die mit Abstand zueinander angeordnet sind, abzustützen.

Die Ausführungen gemäß der Figuren 7 und 8 unterscheiden sich dadurch voneinander, dass gemäß der Figur 8 die Laufflächen 5 wiederum auf einer in den zweiten Axialteil 2 eingesetzten Führungsschiene 10 vorgesehen sind, wohingegen sie gemäß der Figur 7 einteilig mit dem Axialteil 2 ausgebildet sind.

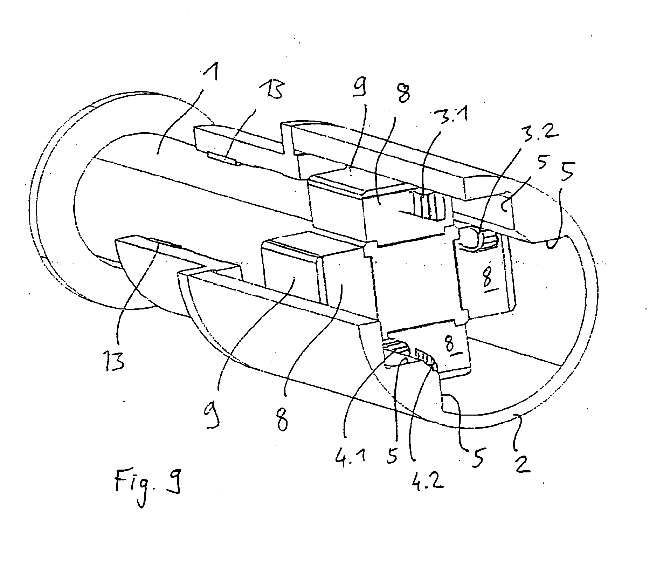

Gemäß der Figur 9 umfassen die Lagereinheiten 3.1, 3.2 und 4.1, 4.2 wiederum Lineareinheiten. Pro Vorsprung 8 ist diesmal eine einzige Lineareinheit vorgesehen. Insgesamt sind vier Vorsprünge 8 auf dem ersten Axialteil 1 vorgesehen, die kreuzweise zueinander angeordnet sind, das heißt je zwei Vorsprünge 8 stehen sich diametral gegenüber.

Die Vorsprünge 8 sind formschlüssig mit dem ersten Axialteil 1 verbunden, beispielsweise verschraubt. Alternativ ist es möglich, die Vorsprünge 8 integral mit dem ersten Axialteil 1 auszuführen.

Entsprechend den Ausführungen gemäß den Figuren 7 und 8 stützen sich die Lagereinheiten 3.1, 3.2 und 4.1, 4.2 gegen winklig, vorliegend rechtwinklig zueinander angeordnete Laufflächen 5 im zweiten Axialteil 2 oder auf einer darin eingebrachten Führungsschiene (nicht dargestellt) ab. Da die Abstützrichtung - wiederum in Umfangsrichtung der Welle betrachtet - der beiden Lagereinheiten von jedem Paar von Lagereinheiten 3.1, 3.2 und 4.1, 4.2 entgegengesetzt zueinander ist, kann die gewünschte spielfreie Verbindung in Umfangsrichtung zwischen dem ersten Axialteil 1 und dem zweiten Axialteil 2 erreicht werden.

Zusätzlich können auf der äußeren Stirnseite der Vorsprünge 8 oder woanders wiederum Gleitlager vorgesehen sein, die sich im zweiten Axialteil 2 abstützen.

Aufgrund der paarweise entgegengesetzt zueinander abgestützten Anordnung der Lagereinheiten 3.1, 3.2 und 4.1, 4.2 kann auf zusätzliche Gleitlager mit Ausnahme des wenigstens einen Gleitelements 13 im Bereich des axialen Endes des zweiten Axialteils 2 verzichtet werden. Insbesondere das Zusammenarbeiten der beiden mit Abstand in Axialrichtung zueinander angeordneten einzelnen Gleitpaarungen, gebildet durch das Gleitelement 13 und die äußere Oberfläche des ersten Axialteils 1 und das Gleitlager 9 zusammen mit der inneren Oberfläche des zweiten Axialteils 2, wobei die Anordnungen auch entsprechend vertauscht ausgeführt sein können, so dass das wenigstens eine Gleitelement 13 im ersten Axialteil 1 vorgesehen ist und an einer inneren Oberfläche des zweiten Axialteils 2 gleitet und das Gleitlager 9 innen im zweiten Axialteil 2 vorgesehen ist und an einer äußeren Oberfläche des ersten Axialteils 1 gleitet, ermöglicht eine in Axialrichtung besonders kurze Ausführung der Lagereinheiten 3.1, 3.2, 4.1, 4.2, da diese Lagereinheiten selbst im wesentlichen oder ausschließlich dazu dienen, Drehmoment in Umfangsrichtung zu übertragen, wohingegen die Abstützung in Radialrichtung im wesentlichen oder ausschließlich durch das Gleitelement 13 beziehungsweise das Gleitlager 9 übernommen wird.

Aufgrund der Auswahl von walzenförmigen oder auch tonnenförmigen beziehungsweise kegelförmigen Wälzkörpern in den Lagereinheiten 3.1, 3.2, 4.1, 4.2 wird eine punktförmige beziehungsweise linienförmige Auflage zwischen den beiden Axialteilen 1, 2 in Umfangsrichtung derselben gesehen vermieden und stattdessen ausschließlich eine flächenförmige Auflage hergestellt, so dass sich die aus dem Drehmoment resultierende Abstützkraft gleichmäßig auf eine in Radialrichtung oder im wesentlichen in Radialrichtung verlaufende Fläche verteilt.

Obwohl bei den gezeigten Ausführungen der Erfindung die Lagereinheiten 3.1, 3.2 und 4.1, 4.2 stets in oder an dem ersten Axialteil 1 angeordnet waren, ist es alternativ möglich, die Lagereinheiten in oder am zweiten Axialteil 2 anzuordnen. Auch Mischformen sind denkbar, so dass ein Teil der Lagereinheiten im oder am ersten Axialteil und ein anderer Teil der Lagereinheiten im oder am zweiten Axialteil angeordnet sein können. Die Laufflächen 5 würden dann dementsprechend aus dem einen in den anderen Axialteil versetzt werden, um geeignet mit den Lagereinheiten des anderen Axialteils zusammenarbeiten zu können.

## Patentansprüche

1. Welle mit Längenausgleich, umfassend
1.1 einen ersten Axialteil (1) und einen zweiten Axialteil (2), welche in Axialrichtung der Welle relativ zueinander verschiebbar sind;
1.2 mit einer Wälzlagerung zwischen dem ersten und dem zweiten Axialteil (1, 2);
1.3 die Wälzlagerung ist derart zwischen dem ersten und dem zweiten Axialteil (1, 2) angeordnet, dass ein Drehmoment über diese vom ersten Axialteil (1) auf den zweiten Axialteil (2) oder umgekehrt übertragbar ist, und eine relative Verschiebung zwischen dem ersten Axialteil (1) und dem zweiten Axialteil (2) über eine Abrollbewegung von Wälzkörpern der Wälzlagerung erfolgt;
1.4 die Wälzlagerung wenigstens ein Paar von Lagereinheiten mit einer ersten Lagereinheit (3.1, 4.1) und einer zweiten Lagereinheit (3.2, 4.2) umfasst, wobei jede Lagereinheit (3.1, 3.2. 4,1, 4.2) eine Vielzahl von Wälzkörpern aufweist, und die erste Lagereinheit (3.1. 4.1) den ersten Axialteil (1) spielfrei oder mit Vorspannung in Umfangsrichtung der Welle gegen den zweiten Axialteil (2) abstützt, und die zweite Lagereinheit (3.2, 4.2) den ersten Axialteil (1) spielfrei oder mit Vorspannung in eine zweite, entgegengesetzt zu der ersten Umfangsrichtung gerichtete Umfangsrichtung der Welle gegen den zweiten Axialteil (2) abstützt;
1.5 die Wälzkörper weisen eine zylindrische oder kegelförmige äußere Oberfläche auf und sind mit ihrer Drehachse derart in Radialrichtung der beiden Axialteile oder in einem spitzen Winkel hierzu ausgerichtet, dass sie in Umfangsrichtung der Welle gesehen auf einer ebenen, sich über einen vorgegebenen Durchmesserbereich erstreckenden Fläche abrollen;
1.6 die Lagereinheiten (3.1,4.1, 3.2, 4.2) sind an dem dem zweiten Axialteil (2) zugewandten axialen Ende des ersten Axialteils (1) angeordnet;
1.7 im Bereich des dem ersten Axialteils (1) zugewandten axialen Endes des zweiten Axialteils (2) ist mit Abstand in Axialrichtung zu den Lagereinheiten (3.1, 3.2, 4.1, 4.2) ein Gleitelement (13) im Bereich zwischen dem ersten und dem zweiten Axialteil (1, 2) derart angeordnet, das über dieses eine in Radialrichtung der Welle gerichtete Abstützkraft vom ersten Axialteil (1) auf den zweiten Axialteil (2) oder umgekehrt übertragbar ist und welches die relative Verschiebung zwischen dem ersten Axialteil (1) und dem zweiten Axialteil (2) über eine Gleitbewegung ermöglicht, wohingegen das Gleitelement (13) frei von einer Drehmomentübertragung zwischen dem ersten Axialteil (1) und dem zweiten Axialteil (2) ist.

2. Welle gemäß Anspruch 1, **dadurch gekennzeichnet, dass** die Welle eine Gelenkwelle mit Gelenken, insbesondere Kreuzgelenken, an einem oder an beiden axialen Enden ist.

3. Welle gemäß einem der Ansprüche 1 oder 2, **dadurch gekennzeichnet, dass** der erste Axialteil (1) wenigstens teilweise, insbesondere in Umfangsrichtung vollständig vom zweiten Axialteil (2) umschlossen wird, und die Lagereinheiten (3.1, 3.2, 4.1, 4.2) insbesondere in Radialrichtung zwischen dem ersten Axialteil (1) und dem zweiten Axialteil (2) positioniert sind.

4. Welle gemäß Anspruch 3, **dadurch gekennzeichnet, dass** der erste Axialteil (1) wenigstens einen Vorsprung (8), an welchem eine oder mehrere Lagereinheiten (3.1, 3.2, 4.1, 4.2) angeschlossen sind, umfasst, und der zweite Axialteil (2) wenigstens eine Nut (6) aufweist, in welche die eine oder mehreren Lagereinheiten (3.1, 3.2, 4.1, 4.2) eingreifen.

5. Welle gemäß Anspruch 4, **dadurch gekennzeichnet, dass** die Nut (6) eine oder mehrere, insbesondere zwei, in Axialrichtung der Welle verlaufende Laufflächen (5) aufweist, die insbesondere in einer achsparallelen Axialschnittebene, vorteilhaft außerhalb der Mittelachse der Welle, verlaufen, und die Wälzkörper oder eine sich auf den Wälzkörpern drehende Lagerschale von einer oder mehreren Lagereinheiten (3.1, 3.2, 4.1, 4.2) auf jeweils einer Lauffläche (5) abrollenlabrollt.

6. Welle gemäß Anspruch 5, **dadurch gekennzeichnet, dass** die Lauffläche (5) oder die Laufflächen (5) von wenigstens einer in den zweiten Axialteil (2) eingesetzten Führungsschiene (10), insbesondere aus gehärtetem Metall, gebildet werden.

7. Welle gemäß einem der Ansprüche 1 bis 6, **dadurch gekennzeichnet, dass** der erste Axialteil (1) und der zweite Axialteil (2) zusätzlich über ein oder mehrere Gleitlager (9) im axialen Endbereich der Lagereinheiten (3.1, 4.1, 3.2, 4.2), insbesondere in Radialrichtung außen auf den Lagereinheiten (3.1, 4.1, 3.2, 4.2) gegeneinander abgestützt sind, wobei das oder die Gleitlager (9) insbesondere frei oder im wesentlichen frei von einer Drehmomentübertragung zwischen den beiden Axialteilen (1, 2) sind.

8. Welle gemäß einem der Ansprüche 1 bis 6, **dadurch gekennzeichnet, dass** der erste Axialteil (1) und der zweite Axialteil (2) bis auf das wenigstens eine Gleitelement (13) am axialen Ende des zweiten Axialteils (2) frei von einer zusätzlich zu der Wälzlagerung vorgesehenen Gleitlagerung sind.

9. Welle gemäß einem der Ansprüche 1 bis 8, **dadurch gekennzeichnet, dass** zwei Paare mit jeweils zwei Lagereinheiten (3.1, 3.2, 4.1, 4.2) vorgesehen sind, über welche die beiden Axialteile (1, 2) gegeneinander gelagert sind.

10. Welle gemäß einem der Ansprüche 1 bis 9, **dadurch gekennzeichnet, dass** die beiden Lagereinheiten (3.1, 3.2, 4.1, 4.2) eines Paares in einer gemeinsamen Ebene, insbesondere achsschnittparallelen Ebene, angeordnet sind.

11. Welle gemäß einem der Ansprüche 1 bis 9, **dadurch gekennzeichnet, dass** die beiden Lagereinheiten (3.1, 3.2, 4.1, 4.2) eines Paares winklig oder senkrecht zueinander, insbesondere in Umfangsrichtung der Welle um 90° versetzt zueinander, angeordnet sind.

12. Welle gemäß der Ansprüche 4 und 10, **dadurch gekennzeichnet, dass** die beiden Lagereinheiten (3.1, 3.2, 4.1, 4.2) eines Paares gemeinsam in eine Nut des zweiten Axialteils (2) oder jeweils in eine von zwei nebeneinander in der gemeinsamen Ebene angeordneten Nuten (6) eingreifen, wobei die beiden Nuten (6) insbesondere durch die gemäß Anspruch 6 in den zweiten Axialteil (2) eingesetzte Führungsschiene (10) voneinander getrennt sind.

13. Welle gemäß der Ansprüche 4 und 11, **dadurch gekennzeichnet, dass** jede Lagereinheit (3.1, 3.2, 4.1, 4.2) in eine ihr zugeordnete Nut (6) des zweiten Axialteils (2) eingreift, wobei die benachbart zueinander angeordneten Nuten (6), in welche ein Paar aus zwei Lagereinheiten (3.1, 3.2, 4.1, 4.2) eingreift, insbesondere durch eine gemäß Anspruch 6 in den zweiten Axialteil (2) eingesetzte Führungsschiene (10) voneinander getrennt sind.

14. Welle gemäß einem der Ansprüche 1 bis 13, **dadurch gekennzeichnet, dass** eine, mehrere oder alle Lagereinheiten (3.1, 3.2, 4.1, 4.2) als Lineareinheiten ausgebildet sind.

15. Welle gemäß einem der Ansprüche 1 bis 13, **dadurch gekennzeichnet, dass** eine, mehrere oder alle Lagereinheiten (3.1, 3.2, 4.1, 4.2) als Wälzlager mit Kurvenrollen (11) ausgebildet sind.

16. Welle gemäß einem der Ansprüche 1 bis 15, **dadurch gekennzeichnet, dass** die erste Lagereinheit (3.1, 4.1) spielfrei oder mit Vorspannung in eine erste Umfangsrichtung der Welle gegen den ersten Axialteil (1) oder den zweiten Axialteil (2) abgestützt ist, und die zweite Lagereinheit (3.2, 4.2), die im selben Axialteil wie die erste Lagereinheit angeordnet ist, spielfrei oder mit Vorspannung in eine zweite, entgegengesetzt zu der ersten Umfangsrichtung gerichtete Umfangsrichtung der Welle gegen denselben Axialteil abgestützt ist.

17. Welle gemäß einem der Ansprüche 1 bis 16, **dadurch gekennzeichnet, dass** insgesamt genau vier Lagereinheiten (3.1, 3.2, 4.1, 4.2) vorgesehen sind.

18. Welle gemäß einem der Ansprüche 1 bis 17, **dadurch gekennzeichnet, dass** zusätzlich zu der Wälzlagerung mit den Lagereinheiten (3.1, 3.2, 4.1, 4.2) und dem Gleitelement (13) eine Gleitlagerung, welche insbesondere von einer Zentrierscheibe (7) gebildet wird, vorgesehen ist, mittels welcher der erste Axialteil (1) im zweiten Axialteil (2) gelagert ist.

## Claims

1. A shaft with length compensation, comprising
1.1 a first axial part (1) and a second axial part (2) which are displaceable relative to one another in the axial direction of the shaft;
1.2 a rolling bearing between the first and second axial part (1, 2);
1.3 the rolling bearing is arranged between the first and second axial part (1, 2) in such a way that a torque can be transferred via the same from the first axial part (1) to the second axial part (2) or vice-versa, and a relative displacement between the first axial part (1) and the second axial part (2) occurs via a rolling motion of rolling bodies of the rolling bearing;
1.4 the rolling bearing comprises at least one pair of bearing units with a first bearing unit (3.1, 4.1) and a second bearing unit (3.2, 4.2.), with each bearing unit (3.1, 3.2, 4.1, 4.2.) comprising a plurality of rolling bodies, and the first bearing unit (3.1, 4.1) supporting the first axial part (1) against the second axial part (2) in a play-free manner or with pretension in the circumferential direction of the shaft, and the second bearing unit (3.2, 4.2.) supporting the first axial part (1) against the second axial part (2) in a play-free manner or with pretension in a second circumferential direction of the shaft which is directed opposite to the first circumferential direction;
1.5 the rolling bodies have a cylindrical or conical outer surface and are aligned with their rotational axis in such a way in the radial direction of the two axial parts or at an acute angle in relation to the same that they roll off on a planar surface extending over a predetermined diametrical area, when seen in the circumferential direction of the shaft;
1.6 the bearing units (3.1, 4.1, 3.2, 4.2.) are arranged on axial end of the first axial part (1) which faces the second axial part (2);
1.7 a sliding element (13) is arranged in the region between the first and second axial part (1, 2) at a distance in the axial direction to the bearing units (3.1, 3.2, 4.1, 4.2.) in such a way in the region of the axial end of the second axial part (2) facing the first axial part (1) that a supporting force directed in the radial direction of the shaft can be transferred via the same from the first axial part (1) to the second axial part (2) or vice-versa and which enables the relative displacement between the first axial part (1) and the second axial part (2) via a sliding motion, whereas the sliding element (13) is free from any transfer of torque between the first axial part (1) and the second axial part (2).

2. A shaft according to claim 1, **characterized in that** the shaft is a cardan shaft with joints, especially cardan universal joints, on one or both axial ends.

3. A shaft according to one of the claims 1 or 2, **characterized in that** the first axial part (1) is encloses at least partly, especially completely, in the circumferential direction by the second axial part (2), and the bearing units (3.1, 3.2, 4.1, 4.2) are positioned especially in the radial direction between the first axial part (1) and the second axial part (2).

4. A shaft according to claim 3, **characterized in that** the first axial part (1) comprise at least one projection (8) to which one or several bearing units (3.1, 3.2, 4.1, 4.2) are connected, and the second axial part (2) comprises at least one groove (6) in which the one or several bearing units (3.1, 3.2, 4.1, 4.2) will engage.

5. A shaft according to claim 4, **characterized in that** the groove (6) comprises one or several, especially two, running surfaces (5) which extend in the axial direction of the shaft and extend especially in an axially parallel axial plane of intersection, advantageously outside of the central axis of the shaft, and the rolling bodies or one bearing shell rotating on the rolling bodies rolling off one or several bearing units (3.1, 3.2, 4.1, 4.2) on one running surface (5) each.

6. A shaft according to claim 5, **characterized in that** the running surface (5) or the running surfaces (5) are formed by at least one guide rail (10), especially made of hardened metal, which rail is inserted in the second axial part (2).

7. A shaft according to one of the claims 1 to 6, **characterized in that** the first axial part (1) and the second axial part (2) are additionally supported against one another via one or several slide bearings (9) in the axial end region of the bearing units (3.1, 4.1, 3.2, 4.2), especially in the radial direction outside on the bearing units (3.1, 4.1, 3.2, 4.2), with the slide bearing(s) (9) being especially free or substantially free from any transfer of torque between the two axial parts (1, 2).

8. A shaft according to one of the claims 1 to 6, **characterized in that** the first axial part (1) and the second axial part (2) are free from an additional slide bearing provided additionally to the rolling bearing, with the exception of the at least one slide element (13) at the axial end of the second axial part (2).

9. A shaft according to one of the claims 1 to 8, **characterized in that** two pairs with two bearing units (3.1, 3.2, 4.1, 4.2) each are provided through which the two axial parts (1, 2) are held against one another.

10. A shaft according to one of the claims 1 to 9, **characterized in that** the two bearing units (3.1, 3.2, 4.1, 4.2) of a pair are arranged in a common plane, especially parallel to an axially sectional plane.

11. A shaft according to one of the claims 1 to 9, **characterized in that** the two bearing units (3.1, 3.2, 4.1, 4.2) of a pair are arranged angular or perpendicular with respect to one another, especially offset by 90° with respect to each other in the circumferential direction of the shaft.

12. A shaft according to the claims 4 and 10, **characterized in that** the two bearing units (3.1, 3.2, 4.1, 4.2) of a pair engage jointly in one groove of the second axial part (2) or each in one of two grooves (6) arranged adjacent to one another in a common plane, with the two grooves (6) being separated from one another especially by the guide rail (10) inserted according to claim 6 in the second axial part (2).

13. A shaft according to claims 4 and 11, **characterized in that** each bearing unit (3.1, 3.2, 4.1, 4.2.) engages in a groove (6) of the second axial part (2) which is associated with the same, with the grooves (6) which are arranged adjacent to one another and in which a pair of two bearing units (3.1, 3.2, 4.1, 4.2) engages being separated from one another especially by a guide rail (10) inserted according to claim 6 in the second axial part (2).

14. A shaft according to one of the claims 1 to 13, **characterized in that** one, several or all bearing units (3.1, 3.2, 4.1, 4.2) are arranged as linear units.

15. A shaft according to one of the claims 1 to 13, **characterized in that** one, several or all bearing units (3.1, 3.2, 4.1, 4.2) are arranged as rolling bearings with curve rollers.

16. A shaft according to one of the claims 1 to 15, **characterized in that** the first bearing unit (3.1, 4.1) is supported in a play-free manner or with pretension in a first circumferential direction of the shaft against the first axial part (1) or the second axial part (2), and the second bearing unit (3.2, 4.2) which is arranged in the same axial part as the first bearing unit is supported against the same axial part in a play-free manner or with pretension in a second circumferential direction which is directed opposite to the first circumferential direction.

17. A shaft according to one of the claims 1 to 16, **characterized in that** a total of precisely four bearing units (3.1, 3.2, 4.1, 4.2) are provided.

18. A shaft according to one of the claims 1 to 17, **characterized in that** a slide bearing which is formed especially by a centering disk (7) is provided in addition to the rolling bearing with the bearing units (3.1, 3.2, 4.1, 4.2) and the slide element (13), by means of which the first axial part (1) is held in the second axial part (2).

## Revendications

1. Arbre avec compensation de la longueur, comprenant
1.1 une première partie axiale (1) et une deuxième partie axiale (2), qui peuvent se déplacer dans le sens axial de l'arbre l'une par rapport à l'autre ;
1.2 avec un palier à roulement entre la première partie axiale et la deuxième (1, 2) ;
1.3 le palier à roulement est disposé entre la première partie axiale et la deuxième (1, 2) de telle façon qu'il puisse transmettre un couple de rotation de la première partie axiale (1) à la deuxième partie axiale (2) ou vice versa et qu'un déplacement relatif entre la première partie axiale (1) et la deuxième partie axiale (2) s'effectue par un mouvement de roulement des éléments roulants du palier à roulement ;
1.4 le palier à roulement comprend au moins une paire d'unités de palier avec une première unité de palier (3.1, 4.1) et une deuxième unité de palier (3.2, 4.2), chaque unité de palier (3.1, 3.2, 4.1, 4.2) comprenant une pluralité d'éléments roulants et la première unité de palier (3.1, 4.1) soutenant la première partie axiale (1) sans jeu ou avec une précontrainte dans le sens de la circonférence de l'arbre contre la deuxième partie axiale (2), et la deuxième unité de palier (3.2, 4.2) soutenant la première partie axiale (1) sans jeu ou avec une précontrainte dans une deuxième direction circonférentielle opposée à la première direction circonférentielle de l'arbre contre la deuxième partie axiale (2) ;
1.5 les éléments roulants possèdent une surface extérieure cylindrique ou conique et sont orientés avec leur axe de rotation dans le sens radial des deux parties axiales ou à angle aigu par rapport à celles-ci de telle façon que, vus dans le sens de la circonférence de l'arbre, ils roulent sur une surface plane s'étendant sur une plage de diamètres prédéterminée ;
1.6 les unités de palier (3.1, 4.1, 3.2, 4.2) sont disposées à l'extrémité de la première partie axiale (1) orientée vers la deuxième partie axiale (2) ;
1.7 il est prévu au niveau de l'extrémité de la deuxième partie axiale (2) orientée vers la première partie axiale (1), à distance dans le sens axial des unités de palier (3.1, 3.2, 4.1, 4.2), un élément de glissement (13) disposé entre la première partie axiale et la deuxième (1, 2) de telle façon qu'il puisse transmettre une force d'appui dirigée dans le sens radial de l'arbre de la première partie axiale (1) à la deuxième partie axiale (2) ou vice versa et permettant le déplacement relatif entre la première partie axiale (1) et la deuxième partie axiale (2) par un mouvement de glissement, alors que l'élément de glissement (13) n'assure aucune transmission de couple entre la première partie axiale (1) et la deuxième partie axiale (2).

2. Arbre selon la revendication 1, **caractérisé en ce que** l'arbre est un arbre articulé avec des articulations, en particulier des articulations à la Cardan, à une extrémité axiale ou aux deux.

3. Arbre selon l'une des revendications 1 ou 2, **caractérisé en ce que** la première partie axiale (1) est au moins partiellement et en particulier complètement renfermée sur sa circonférence par la deuxième partie axiale (2) et les unités de palier (3.1, 3.2, 4.1, 4.2) sont positionnées en particulier dans le sens radial entre la première partie axiale (1) et la deuxième partie axiale (2).

4. Arbre selon la revendication 3, **caractérisé en ce que** la première partie axiale (1) comprend au moins une saillie (8) sur laquelle sont raccordées une ou plusieurs unités de palier (3.1, 3.2, 4.1, 4.2), et la deuxième partie axiale (2) présente au moins une gorge (6) dans laquelle les une ou plusieurs unités de palier (3.1, 3.2, 4.1, 4.2) se mettent en prise.

5. Arbre selon la revendication 4, **caractérisé en ce que** la gorge (6) présente une ou plusieurs, en particulier deux, surfaces de roulement (5) orientées dans le sens axial de l'arbre, qui passent en particulier dans un plan de coupe axiale parallèle à l'axe, de préférence en dehors de l'axe médian de l'arbre, et les éléments roulants ou une enveloppe de roulement tournant sur les éléments roulants d'une ou plusieurs unités de palier (3.1, 3.2, 4.1, 4.2) roulent chacun sur une surface de roulement (5).

6. Arbre selon la revendication 5, **caractérisé en ce que** la surface de roulement (5) ou les surfaces de roulement (5) sont formées par au moins un rail de guidage (10), en particulier en métal durci, inséré dans la deuxième partie axiale (2).

7. Arbre selon l'une des revendications 1 à 6, **caractérisé en ce que** la première partie axiale (1) et la deuxième partie axiale (2) sont soutenues en outre l'une par rapport à l'autre par l'intermédiaire d'un ou plusieurs paliers de glissement (9) dans la partie d'extrémité axiale des unités de palier (3.1, 4.1, 3.2, 4.2), en particulier à l'extérieur dans le sens radial sur les unités de palier (3.1, 4.1, 3.2, 4.2), le ou les paliers de glissement (9) n'assurant en particulier aucune ou sensiblement aucune transmission du couple entre les deux parties axiales (1, 2).

8. Arbre selon l'une des revendications 1 à 6, **caractérisé en ce que** la première partie axiale (1) et la deuxième partie axiale (2) à l'exception de l'au moins un élément de glissement (13) à l'extrémité axiale de la deuxième partie axiale (2) ne comportent pas de palier de glissement prévu en supplément du palier à roulement.

9. Arbre selon l'une des revendications 1 à 8, **caractérisé en ce qu'**il est prévu deux paires de deux unités de palier (3.1, 3.2, 4.1, 4.2) par lesquelles les deux parties axiales (1, 2) sont supportées l'une par rapport à l'autre.

10. Arbre selon l'une des revendications 1 à 9, **caractérisé en ce que** les deux unités de palier (3.1, 3.2, 4.1, 4.2) d'une paire sont disposées dans un plan commun, en particulier un plan parallèle à la coupe axiale.

11. Arbre selon l'une des revendications 1 à 9, **caractérisé en ce que** les deux unités de palier (3.1, 3.2, 4.1, 4.2) d'une paire sont disposées l'une par rapport à l'autre selon un axe ou perpendiculairement, en particulier décalées de 90° l'une par rapport à l'autre dans le sens de la circonférence de l'arbre.

12. Arbre selon les revendications 4 et 10, **caractérisé en ce que** les deux unités de palier (3.1, 3.2, 4.1, 4.2) d'une paire se mettent en prise ensemble dans une gorge de la deuxième partie axiale (2) ou chacune dans une de deux gorges (6) disposées l'une à côté de l'autre dans le même plan, les deux gorges (6) étant séparées l'une de l'autre en particulier par le rail de guidage (10) introduit dans la deuxième partie axiale (2) selon la revendication 6.

13. Arbre selon les revendications 4 et 11, **caractérisé en ce que** chaque unité de palier (3.1, 3.2, 4.1, 4.2) se met en prise dans une gorge (6) qui lui est associée de la deuxième partie axiale (2), les gorges (6) voisines l'une de l'autre dans lesquelles se met en prise une paire de deux unités de palier (3.1, 3.2, 4.1, 4.2) étant séparées l'une de l'autre, en particulier par le rail de guidage (10) introduit dans la deuxième partie axiale (2) selon la revendication 6.

14. Arbre selon l'une des revendications 1 à 13, **caractérisé en ce qu'**une, plusieurs ou toutes les unités de palier (3.1, 3.2, 4.1, 4.2) sont conformées comme des unités linéaires.

15. Arbre selon l'une des revendications 1 à 13, **caractérisé en ce qu'**une, plusieurs ou toutes les unités de palier (3.1, 3.2, 4.1, 4.2) sont conformées comme des paliers de roulement avec des galets de came (11).

16. Arbre selon l'une des revendications 1 à 15, **caractérisé en ce que** la première unité de palier (3.1, 4.1) est soutenue sans jeu ou avec une précontrainte dans une première direction circonférentielle de l'arbre contre la première partie axiale (1) ou la deuxième partie axiale (2), et la deuxième unité de palier (3.2, 4.2), qui est disposée dans la même partie axiale que la première unité de palier, est soutenue sans jeu ou avec une précontrainte dans une deuxième direction circonférentielle orientée à l'opposé de la première direction circonférentielle contre la même partie axiale.

17. Arbre selon l'une des revendications 1 à 16, **caractérisé en ce qu'**il est prévu en tout exactement quatre unités de palier (3.1, 3.2, 4.1, 4.2).

18. Arbre selon l'une des revendications 1 à 17, **caractérisé en ce qu'**outre le palier de roulement avec les unités de palier (3.1, 3.2, 4.1, 4.2) et l'élément de glissement (13), il est prévu un palier de glissement qui est formé en particulier d'une rondelle de centrage (7), au moyen de laquelle la première partie axiale (1) est supportée dans la deuxième partie axiale (2).
